# EUROPÄISCHE PATENTANMELDUNG

(11) **EP 4 542 836 A1**
(43) Veröffentlichungstag der Anmeldung: **23.04.2025**
(21) Anmeldenummer: 23205056.7
(22) Anmeldetag: 20.10.2023
(51) Int. Cl.: H02K 15/12, B32B 37/12, C09J 5/02, H02K 15/02, H02K 1/32, H02K 1/20

(54) **BLECHPAKET UND VERFAHREN ZUM ABDICHTEN ZUMINDEST EINES FLÜSSIGKEITSKANALS IN DIESEM BLECHPAKET**

(71) Anmelder: voestalpine Stahl GmbH, 4020 Linz (AT)
(72) Erfinder: Fluch, Ronald, 4020 Linz (AT); Scherb, Michael, 4060 Leonding (AT)
(74) Vertreter: Jell, Friedrich

(57) **Zusammenfassung**

Es wird ein Blechpaket (3) und ein Verfahren zum Abdichten zumindest eines Flüssigkeitskanals (2) in diesem Blechpaket (3) gezeigt. Für eine hohe Reproduzierbarkeit wird vorgeschlagen, dass in den zumindest einen Flüssigkeitskanal (2) ein erstes flüssiges Fluid (6), aufweisend Silan, eingebracht, dieses erste flüssige Fluid (6) mit einer ersten Haltezeit unter erstem Druck (p1) im Flüssigkeitskanal (2) gehalten und danach aus dem Flüssigkeitskanal (2), insbesondere durch Ausblasen, ausgebracht wird, und nachfolgend in den zumindest einen Flüssigkeitskanal (2) ein zweites flüssiges und zumindest eine Aminogruppe enthaltendes Fluid (8) eingebracht wird.

## Beschreibung

Die Erfindung betrifft ein Blechpaket und ein Verfahren zum Abdichten zumindest eines Flüssigkeitskanals in diesem Blechpaket, das miteinander durch zumindest eine Klebstoffschicht, insbesondere Schmelzklebelackschicht, insbesondere vollflächig, verklebte Blechteile aufweist, wobei der Flüssigkeitskanal zumindest mehrere dieser Blechteile durchdringt.

Blechpakete mit miteinander verklebten Blechteilen aus einem Elektroband oder -blech werden oftmals im Hochleistungsbereich flüssigkeitsgekühlt, um eine verlustleistungsbedingte Erwärmung zu minimieren. Hierzu werden Flüssigkeitskanäle im Blechpaket mit einer Kühlflüssigkeit durchströmt - dies auch meist unter vergleichsweise hohem Druck. Aus diesem Grund muss die Verklebung der Blechteile gegenüber hydraulischer Belastung vergleichsweise standfest ausgebildet sein, um Druckbeständigkeit und Leckagefreiheit zu erreichen. Blechpakete, die diese Anforderungen nicht erfüllen, können nachteilig nicht verwendet werden und stellen Ausschuss dar.

Die Erfindung hat sich daher die Aufgabe gestellt, ein Verfahren zu schaffen, mit dem ein Flüssigkeitskanal eines Blechpakets, das miteinander verklebte Blechteilen aufweist, abgedichtet werden kann. Zudem soll das Verfahren schnell und einfach handhabbar sein.

Die Erfindung löst die gestellte Aufgabe durch die Merkmale des Anspruchs 1.

Wird in den zumindest einen Flüssigkeitskanal ein erstes flüssiges Fluid, aufweisend Silan, eingebracht, dieses erste flüssige Fluid mit einer ersten Haltezeit unter erstem Druck im Flüssigkeitskanal gehalten und danach aus dem Flüssigkeitskanal ausgebracht, können bereits Maßnahmen und auch Vorbereitungen getroffen werden, diesen Flüssigkeitskanal abzudichten. Das druckbeaufschlagte Silan kann nämlich aufgrund dessen vergleichsweise niedrigen Oberflächenspannung selbst in kleinste Freiräume zwischen den Blechteilen, wie Lücken oder Spalten, eindringen und damit diese zur Versiegelung vorbereiten und/oder damit versiegeln. Auch können damit unerwartet auftretende Verklebungsfehler, beispielsweise unverklebte Bereiche - auch zwischen zwei Klebstoffschichten zuverlässig aufgefüllt und damit ausgebessert werden. Vorzugsweise wird das erste flüssige Fluid durch Ausblasen aus dem zumindest einen Flüssigkeitskanal ausgebracht, was verfahrensschnell durchgeführt werden kann. Zudem schützt ein Ausblasen auch jenes zum Versiegeln zwischen den Blechteilen eingedrungenes Silan vor einem ungewollten Nachfließen, beispielsweise bedingt durch eine Oberflächenspannung.

Das Abdichten des Flüssigkeitskanals kann weiter verbessert werden, indem in einem weiteren Schritt in den zumindest einen Flüssigkeitskanal ein zweites; flüssiges und zumindest eine Aminogruppe enthaltendes Fluid eingebracht wird. Aufgrund einer chemischen Reaktion der Aminogruppe mit dem Silan kann an den Fehlstellen eine hochviskose Masse geschaffen werden, die zuverlässig zur Versiegelung führt und das auch vergleichsweise verfahrensschnell.

Sohin kann ein Eindringen von Kühlflüssigkeit in Bereiche zwischen den Blechteilen zuverlässig verhindert werden.

Zudem kann durch eine weitere chemische Reaktion zwischen dem Klebstoff und der Aminogruppe die Anbindung der hochviskose Masse an den Klebstoff verbessert werden. Dies insbesondere dann, wenn es sich beim Klebstoff um einen Schmelzklebelack, insbesondere Backlack, handelt. Beispielsweise kann es sich hier um ein Bisphenol-basiertes Epoxidharz-System mit einem Härter, beispielsweise mit einer Dicyandiamidbasis, handelt.

Erfindungsgemäß kann so reproduzierbar und schnell ein Flüssigkeitskanal eines Blechpakets abgedichtet werden - dies auch vergleichsweise einfach handhabbar.

Selbst kleinste vom Flüssigkeitskanal ausgehende Zwischenräume zwischen den Blechteilen können erfolgreich abgedichtet werden, wenn beispielsweise das erste flüssige Fluid ein niedermolekulares, insbesondere teilhydrolysiertes, Silan oder eine Mischung aus, insbesondere solch einem, Silan und Triethylenglykol ist. Beispielsweise handelt es sich bei diesem Silan um GLYEO (3-glycidyloxy-propyl-triethoxysilan) oder AMEO (3-aminopropyltriethoxysilan).

Vorzugsweise ist das zweite flüssige Fluid Harnstoff ist, was zu einer vergleichsweise schnellen Reaktion mit dem ersten flüssigen Fluid führen kann.

Vorstehendes ist umso effizienter, wenn das erste flüssige Fluid den Flüssigkeitskanal diesen vollständig füllend eingebracht wird. Damit entstehen auch keine erhöhten Kosten, zumal das dabei ausgetragene erste flüssige Fluid abzüglich dem zwischen den Blechteilen eingedrungene Mengen einer Wiederverwendung zugeführt werden kann. Das erfindungsgemäße Verfahren ist daher auch vergleichsweise kostengünstig.

Das Verfahren kann weiter verbessert werden, wenn das eingebrachte erste flüssige Fluid im Bereich von 1 bis 10 bar unter erstem Druck gehalten wird. Beispielsweise kann damit das erste flüssige Fluid in ausreichenden Mengen in abzudichtende Freiräume eindringen. Dies umso besser, wenn das erste flüssige Fluid im Bereich von 2 bis 6 bar unter erstem Druck gehalten wird.

Wird das eingebrachte erste flüssige Fluid mit einer ersten Haltezeit im Bereich von 0,5 bis 5 Sekunden unter erstem Druck gehalten, kann dies bei vergleichsweise kurzer Taktzeit zuverlässig ein Eindringen in Fehlstellen sicherstellen.

Beispielsweise kann für vorstehend Genanntes bereits eine erste Haltezeit im Bereich von 1 bis 3 Sekunden ausreichen.

Beispielsweise kann ein Viskositätsgrad, der von der Reaktion der Aminogruppe mit Silan abhängt, vorteilhaft eingestellt werden, indem das eingebrachte zweite flüssige Fluid im zumindest einen Flüssigkeitskanal mit einer zweiten Haltezeit im Bereich von 0,5 bis 10 Sekunden gehalten wird. Hierzu kann bereits beispielsweise ausreichen, wenn diese zweite Haltezeit im Bereich von 2 bis 5 Sekunden liegt.

Vorzugsweise wird das zweite flüssige Fluid in den zumindest einen Flüssigkeitskanal diesen vollständig füllend eingebracht, um eine zuverlässige Versiegelung zu erreichen.

Beispielsweise wird das zweite flüssige Fluid durch Ausblasen aus dem Flüssigkeitskanal ausgebracht, um so im Verfahren eine hohe Taktrate sicherstellen zu können.

Indem nach dem Ausbringen des zweiten flüssigen Fluids eine Druckprüfung auf Leckage des Flüssigkeitskanals durchgeführt wird, kann beispielsweise die Reproduzierbarkeit des Verfahrens weiter erhöht werden.

Wird ersten und/oder zweite flüssige Fluid in den zumindest einen Flüssigkeitskanal eines erwärmten Blechpakets eingebracht, kann dies das Auffüllen selbst kleinster Freiräume zwischen den Blechteilen weiter begünstigen. Die Druckfestigkeit des Blechpakets kann damit beispielsweise weiter erhöht werden.

Vorstehendes kann weiter verbessert werden, wenn das erwärmte Blechpaket eine Temperatur größer der Glasübergangstemperatur (Tg) des Schmelzklebelacks und kleiner der Verbackungstemperatur des Schmelzklebelacks aufweist.

Die Erfindung hat sich zudem die Aufgabe gestellt, ein Blechpaket zu schaffen, dass gegenüber einer Leckage an Flüssigkeit standfester ausgebildet ist.

Die Erfindung löst die gestellte Aufgabe durch die Merkmale des Anspruchs 13.

Indem das Blechpaket zwischen den Blechteilen Silan aufweist, kann erfindungsgemäß ein Flüssigkeitskanal gegenüber Leckage besonders standfest abgedichtet: Außerdem kann sich solch ein Blechpaket für eine Flüssigkeitskühlung mit vergleichsweise hohen hydraulischen Drücken eignen.

Vorstehendes kann weiter verbessert werden, wenn das Blechpaket zwischen den Blechteilen auch Harnstoff aufweist.

Das erfindungsgemäße Blechpaket kann sich insbesondere für eine elektrische Maschine eignen.

In den Figuren ist beispielsweise der Erfindungsgegenstand anhand eines Ausführungsbeispiels näher dargestellt. Es zeigen
- Fig. 1: eine Vorrichtung zur Durchführung des erfindungsgemäßen Verfahrens,
- Fig. 2: eine abgerissene Detailansicht der Fig. 1 und
- Fig. 3: eine abgerissene Detailansicht der Fig. 1 bei der Durchführung eines anderen Verfahrensschritts des erfindungsgemäßen Verfahrens.

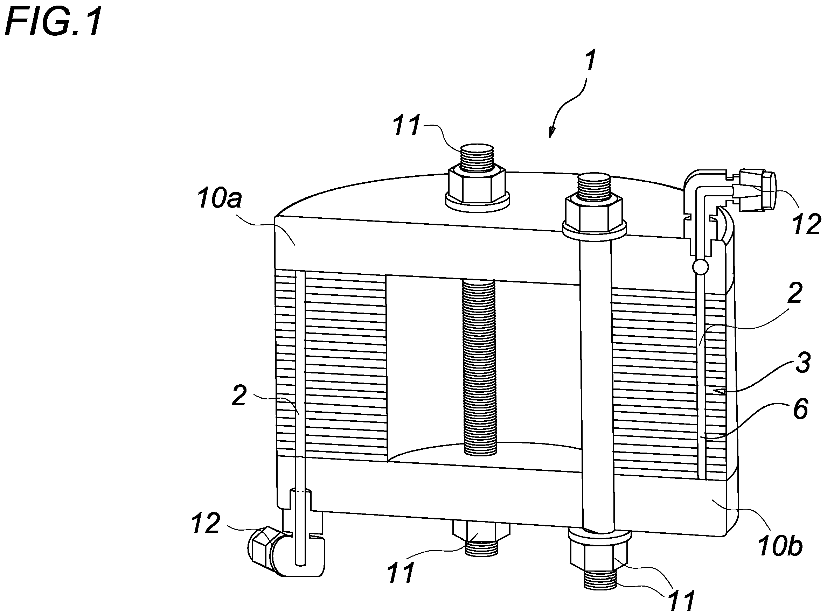

Gemäß Fig. 1 wird eine Vorrichtung 1 dargestellt, die zum Abdichten eines Flüssigkeitskanals 2 in einem Blechpaket 3 dient. Das Blechpaket 3 besteht aus miteinander im Ausführungsbeispiel vollflächig verklebten Blechteilen 4, und zwar ist hierfür jeweils zwischen den einander nachfolgenden Blechteilen 4 je eine Klebstoffschicht 5, nämlich eine Schmelzklebelackschicht, vollflächig vorgesehen, über die die Blechteile 4 aus einem Elektroband oder Elektroblech stoffschlüssig miteinander verbunden sind. Diese Blechteile 4 werden oftmals auch als Lamellen bezeichnet.

Bei der Schmelzklebelackschicht handelt es sich um eine Backlackschicht. Hierbei kann der Klebstoff der Klebstoffschicht 5 teilausgehärtet oder vollständige ausgehärtet sein, was auch unter C-Zustand oder Verbacken bekannt ist.

Der vorzugsweise thermohärtbare und damit thermisch aktivierbare Schmelzklebelack kann beispielsweise eine Epoxydharzbasis aufweisen. Vorzugsweise handelt es sich beim Schmelzklebelack um ein Bisphenol-basiertes Epoxidharz-System mit einem Härter, beispielsweise mit einer Dicyandiamidbasis. Insbesondere kann es sich beim erwähnten Schmelzklebelack um ein Bisphenol-A-Epichlorhydrinharz-System mit Dicyanamid als Härter handeln. Die Glasübergangstemperatur Tg des beispielsweise verwendeten Schmelzklebelacks liegt im Bereich von 65 bis 85 °C (Grad Celsius), gemessen nach ISO 11357-2, liegen. Seine Verbackungstemperatur liegt im Bereich größer gleich 180 Grad.

Zudem kann in den Figuren 1 bis 3 zumindest ein Flüssigkeitskanal 2 erkannt werden, der das Blechpaket vollständig und damit alle Blechteile 4 durchdringt. Der Flüssigkeitskanal 2 dient zur Flüssigkeitskühlung des Blechpakets, was beispielsweise im Hochleistungsbereich von Vorteil ist.

Das verklebte Blechpaket 3 wird eine Dichtheitsprüfung unterworfen. Hierzu wird das Blechpaket 3 in der Vorrichtung eingespannt, wie in Fig. 1 dargestellt, und der Flüssigkeitskanal 2 beispielsweise mit Druckgas geflutet. Wird ein Druckabfall detektiert, dann wird mithilfe der Vorrichtung 1 eine Abdichtung des Flüssigkeitskanals 2 vorgenommen.

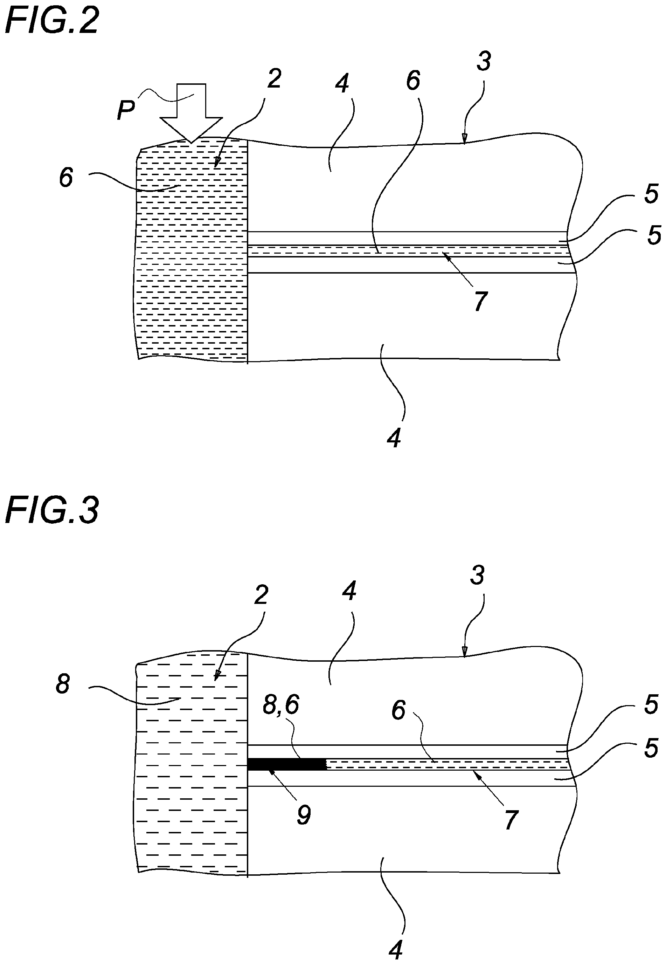

Hierzu wird erfindungsgemäß in einem ersten Schritt in den Flüssigkeitskanal 2 ein erstes flüssiges Fluid 6, nämlich Silan, eingebracht, und zwar den Flüssigkeitskanal 2 vollständig füllend, wie in den Figuren 1 und 2 zu erkennen. Vorzugsweise wird als Silan GLYEO (3-glycidyloxy-propyl-triethoxysilan) verwendet. Das Silan hat eine geringe Oberflächenspannung und kann so in zumindest einen, beispielsweise feinsten, Freiraum 7 zwischen den Blechteilen 4 ausgehend vom Flüssigkeitskanal 2 eindringen und auffüllen, wie dies in Fig. 2 besser zu erkennen ist.

Eventuell aus dem Freiraum 7 und damit aus dem Blechpaket 3 austretendes Silan kann beispielsweise mit einem Trennverfahren entfernt werden. Der nach Fig. 2 und 3 dargestellte Freiraum 7 befindet sich in der Klebstoffschicht 5 selbst. Diese kann sich aber auch zwischen der Klebstoffschicht 5 und dem daran anschließenden Blechteil 4 befinden, was nicht näher dargestellt worden ist.

Das erste flüssige Fluid 6 wird im Flüssigkeitskanal 2 mit einer ersten Haltezeit t1 unter erstem Druck p1 im Flüssigkeitskanal 2 gehalten, dass sich zumindest ein vom Flüssigkeitskanal 2 ausgehender, zwischen den Blechteilen 4 liegender Freiraum 7 zumindest abschnittsweise mit dem ersten flüssigen Fluid 6 füllt, wie dargestellt auffüllt. Danach wird die erste Flüssigkeit 6 aus dem Flüssigkeitskanal 2 ausgebracht und kann gegebenenfalls für das Abdichten eines anderen nachfolgenden Blechpakets 3 wiederverwendet werden, was hier nicht näher dargestellt ist. Dieses Ausbringen erfolgt durch Ausblasen aus dem Flüssigkeitskanal 2, was verfahrensschnell den Flüssigkeitskanal 2 entleert, aber dennoch ein Aufließen aus dem aufgefüllte Freiraum 7 gering hält bzw. minimiert. Das erste flüssige Fluid 6 kann bereits im Freiraum 7 beispielsweise mit der Klebstoffschicht 5 beginnen zu reagieren, um diesen zu versiegeln.

In diesen Flüssigkeitskanal 2 wird erfindungsgemäß nachfolgend, und zwar direkt anschließend, ein zweites, flüssiges und zumindest eine Aminogruppe enthaltendes Fluid 8, nämlich Harnstoff, eingebracht, wie in Fig. 3 dargestellt. Das zweite Fluid 8 reagiert chemisch mit dem ersten flüssigen Fluid 6 und bildet im Anschlussbereich zwischen Flüssigkeitskanal 2 und Freiraum 7 eine hochviskose Masse 9. Damit bildet sich in diesem Bereich eine Art von Verschluss, der den Flüssigkeitskanal 2 standfest und auch verfahrensschnell abdichtet.

Damit kann auch das erste flüssige Fluid 6 unabhängig von einer Druckbeaufschlagung im Flüssigkeitskanal 2 weiter aus reagiere, beispielsweise aushärten. Dies verbessert die Abdichtung und damit die Standfestigkeit des Blechpakets 3 gegenüber vergleichsweise hohen hydraulischen Drücken noch weiter. Zudem ist damit ein gegenüber Kühlflüssigkeit leckagefreier Flüssigkeitskanal 2 geschaffen.

Auch das zweite flüssige Fluid 8 wird in den Flüssigkeitskanal 2 füllend eingebracht und anschließend aus diesem durch Ausblasen ausgebracht.

Als vorteilhaft bei einem mit einem eine Epoxydharzbasis aufweisenden Backlack (nämlich EB549 der Fa. Rembrandtin) verklebten (C-Zustand) Blechpaket 3 mit einer vernetzten Klebstoffschicht 5 in der Höhe von 10 µm (Mikrometer) zwischen den Blechteilen 4 mit je einer Dicke von 0,25 mm (Millimeter) haben sich folgende Verfahrensbedingungen in genannter Reihenfolge herausgestellt:
Erstes flüssiges Fluid: Silan GLYEO (3-glycidyloxy-propyl-triethoxysilan)
   erster Druck p1: 2 bar
   erste Haltezeit: 2 Sekunden
Zweite flüssiges Fluid: Harnstoff
   zweiter Druck p2: keine zusätzliche Druckbeaufschlagung
   zweite Haltezeit: 3 Sekunden

Das erste und zweite flüssige Fluid 6, 8 wurden in den Flüssigkeitskanal 2 diesen vollständig füllend eingebracht und durch Ausblasen aus diesem Flüssigkeitskanal 2 ausgebracht.

Damit konnte eine anfangs gemessene Leckage von 5 ml pro Minute vollständig behoben werden, was eine nach dem Abdichten vorgenommen Druckprüfung mit ATF-Öl bei einem Prüfungsdruck von 1,5 bar zeigte.

Die Druckbeständigkeit konnte weiter auf über 20 bar erhöht werden, in dem das Verfahren bei einem erwärmten Blechpaket 3 durchgeführt wurde. So wurde das Blechpakte 3 auf 90 Grad erwärmt und dann die Schritte mit dem ersten und zweiten flüssigen Fluid 7, 8 durchgeführt.

Die Glasübergangstemperatur Tg des beispielsweise verwendeten Schmelzklebelacks liegt im Bereich von 65 bis 85 °C (Grad Celsius), gemessen nach ISO 11357-2, liegen. Seine Verbackungstemperatur liegt im Bereich größer gleich 180 Grad.

Die gemäß Fig. 1 dargestellte Vorrichtung 1 setzt mit zwei Platten 10a, 10b auf die Stirnseiten des Blechpakets 3 auf, die über mehrere Spannmittel, nämlich Schraubverbindungen 11 miteinander verspannt sind. Die Platten 10a, 10b tragen Anschlüsse 12 zum Einbringen des ersten und zweiten flüssigen Fluids 6, 8 in den jeweiligen Flüssigkeitskanal 2 des Blechpakets 3.

Vorzugsweise wird durch die Erfindung ein Freiraum 7 abgedichtet, der in der Klebstoffschicht 5 selbst und/oder zwischen der Klebstoffschicht 5 und dem daran anschließenden Blechteil 4 besteht. Damit weist das Blechpaket 3 zwischen den Blechteilen 4 Silan und gegebenenfalls auch Harnstoff auf, und zwar im Freiraum 7 in der Klebstoffschicht 5 selbst und/oder zwischen der Klebstoffschicht 5 und dem daran anschließenden Blechteil 4.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Verfahren zum Abdichten zumindest eines Flüssigkeitskanals (2) in einem Blechpaket (3), das miteinander durch zumindest eine Klebstoffschicht (5), insbesondere Schmelzklebelackschicht, insbesondere vollflächig, verklebte Blechteile (4) aufweist, wobei der Flüssigkeitskanal (2) zumindest mehrere dieser Blechteile (4) durchdringt, bei welchem Verfahren
in den zumindest einen Flüssigkeitskanal (2) ein erstes flüssiges Fluid (6), aufweisend Silan, eingebracht,
dieses erste flüssige Fluid (6) mit einer ersten Haltezeit unter erstem Druck (p1) im Flüssigkeitskanal (2) gehalten und danach aus dem Flüssigkeitskanal (2), insbesondere durch Ausblasen, ausgebracht wird, und nachfolgend
in den zumindest einen Flüssigkeitskanal (2) ein zweites flüssiges und zumindest eine Aminogruppe enthaltendes Fluid (8) eingebracht wird.

2. Verfahren nach Anspruch 1, **dadurch gekennzeichnet, dass** das erste flüssige Fluid (6) ein niedermolekulares, insbesondere teilhydrolysiertes, Silan oder eine Mischung aus, insbesondere solch einem, Silan und Triethylenglykol ist.

3. Verfahren nach Anspruch 1 oder 2, **dadurch gekennzeichnet, dass** das zweite flüssige Fluid (8) Harnstoff ist.

4. Verfahren nach einem der Ansprüche 1 bis 3, **dadurch gekennzeichnet, dass** das erste flüssige Fluid (6) den Flüssigkeitskanal (2) diesen vollständig füllend eingebracht wird.

5. Verfahren nach einem der Ansprüche 1 bis 4, **dadurch gekennzeichnet, dass** das eingebrachte erste flüssige Fluid (6) im Bereich von 1 bis 10 bar, insbesondere im Bereich von 2 bis 6 bar, unter erstem Druck (p1) gehalten wird.

6. Verfahren nach einem der Ansprüche 1 bis 5, **dadurch gekennzeichnet, dass** das eingebrachte erste flüssige Fluid (6) mit einer ersten Haltezeit unter erstem Druck (p1) im Bereich von 1 bis 10 bar, insbesondere im Bereich von 2 bis 6 bar, in dem Flüssigkeitskanal (2) gehalten wird.

7. Verfahren nach einem der Ansprüche 1 bis 6, **dadurch gekennzeichnet, dass** das eingebrachte erste flüssige Fluid (6) mit einer ersten Haltezeit im Bereich von 0,5 bis 5 Sekunden, insbesondere im Bereich von 1 bis 3 Sekunden, unter erstem Druck (p1) gehalten wird.

8. Verfahren nach einem der Ansprüche 1 bis 7, **dadurch gekennzeichnet, dass** das eingebrachte zweite flüssige Fluid (8) im zumindest einen Flüssigkeitskanal (2) mit einer zweiten Haltezeit im Bereich von 0,5 bis 10 Sekunden, insbesondere im Bereich von 2 bis 5 Sekunden, gehalten wird.

9. Verfahren nach einem der Ansprüche 1 bis 8, **dadurch gekennzeichnet, dass** das zweite flüssige Fluid (8) in den zumindest einen Flüssigkeitskanal (2) diesen vollständig füllend eingebracht wird und/oder dass das zweite flüssige Fluid (8), insbesondere durch Ausblasen, aus dem zumindest einen Flüssigkeitskanal (2) ausgebracht wird.

10. Verfahren nach einem der Ansprüche 1 bis 9, **dadurch gekennzeichnet, dass** nach dem Ausbringen des zweiten flüssigen Fluids (8) eine Druckprüfung auf Leckage des Flüssigkeitskanals (2) durchgeführt wird.

11. Verfahren nach einem der Ansprüche 1 bis 10, **dadurch gekennzeichnet, dass** das erste und/oder zweite flüssige Fluid (6, 8) in den zumindest einen Flüssigkeitskanal (2) eines erwärmten Blechpakets (3) eingebracht wird.

12. Verfahren nach Anspruch 11, **dadurch gekennzeichnet, dass** das erwärmte Blechpaket (3) eine Temperatur größer der Glasübergangstemperatur (Tg) des Schmelzklebelacks und kleiner der Verbackungstemperatur des Schmelzklebelacks aufweist.

13. Blechpaket, insbesondere abgedichtet mit einem Verfahren nach einem der Ansprüche 1 bis 12, mit miteinander durch eine Klebstoffschicht (5), insbesondere Schmelzklebelackschicht, verklebten Blechteilen (4) und mit mindestens einem Flüssigkeitskanals (2), der zumindest mehrere Blechteile (4) des Blechpakets (3) durchdringt, wobei das Blechpaket (3) zwischen den Blechteilen (4) Silan aufweist.

14. Blechpaket nach Anspruch 13, **dadurch gekennzeichnet, dass** das Blechpaket (3) zwischen den Blechteilen (4) Harnstoff aufweist.

15. Elektrische Maschine mit einem Blechpaket nach Anspruch 13 oder 14.
